Europäisches Patentamt

European Patent Office

Office européen des brevets

(11) Veröffentlichungsnummer : **0 353 549 B1**

(19)

## (12) EUROPÄISCHE PATENTSCHRIFT

(45) Veröffentlichungstag der Patentschrift :
01.04.92 Patentblatt 92/14

(21) Anmeldenummer : 89113295.3

(22) Anmeldetag : 20.07.89

(51) Int. Cl.⁵ : **F16F 9/02**

---

(54) **Längeneinstellbare Verstelleinrichtung.**

---

(30) Priorität : **23.07.88 DE 3825076**

(43) Veröffentlichungstag der Anmeldung :
**07.02.90 Patentblatt 90/06**

(45) Bekanntmachung des Hinweises auf die
Patenterteilung :
**01.04.92 Patentblatt 92/14**

(84) Benannte Vertragsstaaten :
**AT BE CH DE ES FR GB IT LI NL SE**

(56) Entgegenhaltungen :
**DE-A- 1 812 282**
**DE-A- 2 942 455**
**DE-A- 3 301 267**
**DE-C-  712 339**
**DE-U- 8 601 132**
**FR-A- 2 598 474**
**GB-A- 2 101 268**

(73) Patentinhaber : **SUSPA COMPART**
**Aktiengesellschaft**
**Industriestrasse 12-14**
**W-8503 Altdorf (DE)**

(72) Erfinder : **Bauer, Hans Jürgen**
**Am Eichenhain 8**
**W-8503 Altdorf (DE)**
Erfinder : **Bauer, Hans-Peter**
**Ziegelhütte 9**
**W-8503 Altdorf (DE)**

(74) Vertreter : **Rau, Manfred, Dr. Dipl.-Ing. et al**
**Rau & Schneck, Patentanwälte Königstrasse 2**
**W-8500 Nürnberg 1 (DE)**

## Beschreibung

Die Erfindung betrifft eine längeneinstellbare Verstelleinrichtung nach dem Oberbegriff des Anspruches 1.

Es gibt zwei grundsätzliche Gruppen derartiger Verstelleinrichtungen. Die eine Gruppe ist beispielsweise bekannt aus dem DE-U 74 34 o98, dem DE-U-74 34 1o2, dem DE-U 74 34 1o1 und dem DE-U-86 o1 132 (entsprechend EP-A-o 234 184). Bei dieser Gruppe von Verstelleinrichtungen ist das Ventil im Kolben angeordnet. Bei der anderen Gruppe von Verstelleinrichtungen, wie sie beispielsweise aus der DE-A 18 12 282 (entsprechend US-A-3 656 593) bekannt sind, ist das Ventil an dem Ende des Gehäuses angeordnet, das dem Austritt der Kolbenstange entgegengesetzt liegt. Beide Arten von Verstelleinrichtungen weisen zumindest eine Teil-Gasfüllung auf, mittels derer die Kolbenstange beim Öffnen des Ventils aus dem Gehäuse hinausgeschoben oder gegen deren Druckkraft die Kolbenstange hineingeschoben werden kann. Wenn der Kolben selber in einem Flüssigkeitsraum verschiebbar ist, dann ist eine vollständige, d.h. praktisch starre Blockierung dieser auch als Gasfeder zu bezeichnenden Verstelleinrichtung möglich. Wenn dagegen das gesamte Gehäuse mit Druckgas gefüllt ist, dann ist auch bei geschlossenem Ventil noch eine Federungsmöglichkeit mit einer sehr steilen Weg-Kraft-Kennlinie gegeben. Je nach Ausgestaltung des Ventils handelt es sich um ein sogenanntes Kurzhub-Ventil oder ein sogenanntes Langhub-Ventil. Bei einem sogenannten Kurzhub-Ventil braucht der Auslösestift nur um eine sehr kurze Wegstrecke, beispielsweise einige Zehntel bis 1 oder 2 mm in seiner Längsrichtung verschoben zu werden, um das Ventil zu öffnen, während bei einem Langhub-Ventil der Auslösestift um mindestens mehrere Millimeter, beispielsweise 3 bis 6 mm verschoben werden muß, bevor das Ventil öffnet. Für diese Zwecke müssen die Ventile jeweils grundsätzlich unterschiedlich konstruiert und gefertigt werden.

Der Erfindung liegt die Aufgabe zugrunde, die gattungsgemäß vorausgesetzten längeneinstellbaren Verstelleinrichtungen so auszugestalten, daß mit nur einer geringfügigen konstruktiven und fertigungstechnischen Änderung wahlweise ein Kurzhub-Ventil oder ein Langhub-Ventil erreichbar ist.

Diese Aufgabe wird erfindungsgemäß durch die Merkmale im Kennzeichnungsteil des Anspruches 1 gelöst. Durch die erfindungsgemäße Ausgestaltung insbesondere der Dichtung wird erreicht, daß diese mit einem Dichtungswulst immer an einer bei der Langhub-Ausführung und bei der Kurzhub-Ausführung vorhandenen kegelstumpfförmigen Dichtfläche anliegt. Wenn nur diese kegelstumpfförmige Dichtfläche vorhanden ist, wenn sich also der verjüngte Abschnitt unmittelbar an diese kegelstumpfförmige Dichtfläche anschließt, dann liegt eine Kurzhub-Ausführung vor. Wenn sich dagegen an die kegelstumpfförmige Dichtfläche noch eine zylindrische Dichtfläche anschließt, an die sich wiederum erst der verjüngte Abschnitt des Ventilkörpers anschließt, dann liegt eine Langhub-Ausführung vor, da der andere Dichtungswulst der Dichtung gegen den zylindrischen Abschnitt anliegt. In diesem Fall muß beim Öffnen des Ventils eine axiale Verschiebung über die gesamte Länge der zylindrischen Dichtfläche erfolgen.

Weitere Einzelheiten, Vorteile und Merkmale der Erfindung ergeben sich aus der nachfolgenden Beschreibung von zwei Ausführungsbeispielen anhand der Zeichnung. Es zeigt

Fig. 1 eine längeneinstellbare Verstelleinrichtung nach der Erfindung in vertikalem Längsschnitt,

Fig. 2 den Kolben mit Ventil der Verstelleinrichtung nach Fig. 1 im Längsschnitt in stark vergrößertem Maßstab,

Fig. 3 einen Teilausschnitt aus dem Kolben mit Ventil mit einem gegenüber Fig. 2 abgewandelten Ventilkörper,

Fig. 4 eine zweite Ausführungsform einer längeneinstellbaren Verstelleinrichtung nach der Erfindung in vertikalem Längsschnitt,

Fig. 5 das Ventil der Verstelleinrichtung nach Fig. 4 im Längsschnitt in stark vergrößertem Maßstab und

Fig. 6 einen Teilausschnitt aus dem Ventil mit einem gegenüber Fig. 5 abgewandelten Ventilkörper.

Die in der Zeichnung dargestellte Verstellvorrichtung ist als starr blockierbare Gasfeder ausgebildet. Sie weist ein zylindrisches, beispielsweise aus einem Stahlrohr gebildetes Gehäuse 1 mit einer Mittel-Längs-Achse 2 auf. An einem Ende ist das Gehäuse 1 mittels eines Verschlußstopfens 3 verschlossen, an dem als Befestigungseinrichtung 4 ein sogenanntes Auge angebracht ist. Der Verschlußstopfen 3 weist in seinem Umfang eine Nut 5 auf, in der eine O-ringförmige Dichtung 6 angeordnet ist, die gegen die Innenwand 7 des Gehäuses 1 dichtend anliegt. Der Verschlußstopfen 3 ist dadurch in Richtung der Achse 2 relativ zum Gehäuse 1 festgelegt, daß dieses eine gegen die Dichtung 6 und in die Nut 5 eingedrückte Sicke 8 aufweist. Außerdem ist das zugeordnete Ende des Gehäuses 1 mit einer den Verschlußstopfen 3 außen umgreifenden Umbördelung 9 versehen.

Am anderen Ende ist das Gehäuse 1 mit einer konzentrisch zur Achse 2 angeordneten Führungsbüchse 1o versehen, die an ihrer Außenseite ebenfalls von einer Umbördelung 11 des Gehäuses 1 übergriffen wird. In der Führungsbüchse 1o ist eine konzentrisch zur Achse 2 angeordnete, aus dem Gehäuse 1 herausgeführte Kolbenstange 12 in ihrer Längsrichtung verschiebbar geführt. Gegen die Führungsbüchse 1o stützt sich eine ringförmige Dichtung 13 ab, die einerseits dichtend gegen die Innenwand 7 des Gehäuses 1 und andererseits gegen die Kolbenstange 12 anliegt. Die Dichtung 13 wiederum wird durch einen Haltering 14 axial zum Inneren des Gehäuses 1 hin gehalten, der mittels einer in das Gehäuse 1 gedrückten Sicke 15 axial festgelegt wird.

Durch die geschilderten Maßnahmen ist das Gehäuse 1 an seinen beiden Enden gas- und flüssigkeitsdicht verschlossen. Im Gehäuse 1 ist ein in Richtung der Achse 2 verschiebbarer Trennkolben 16 angeordnet, der mittels einer O-ringförmigen Dichtung 17 dicht an der Innenwand 7 des Gehäuses anliegt. Zwischen dem Trennkolben 16 und dem Verschlußstopfen 3 ist ein mit Druckgas gefüllter Gasraum 18 gebildet, der gegenüber dem als Flüssigkeitsraum 19 dienenden Gehäuseraum zwischen dem Trennkolben 16 und der Dichtung 13 gas- und flüssigkeitsdicht abgedichtet ist. An dem Trennkolben 16 sind im Flüssigkeitsraum 19 Abstandshalter 2o angebracht.

An dem im Flüssigkeitsraum 19 liegenden inneren Ende der Kolbenstange 12 ist ein Kolben 21 mit einem integrierten Ventil 22 angebracht. Die Betätigung des Ventils 22 von außen erfolgt mittels eines in Form einer dünnen Stange ausgebildeten Auslösestiftes 23, der in einer konzentrisch zur Achse 2 verlaufenden Bohrung 24 in der Kolbenstange 12 angeordnet ist. Am äußeren Ende der Kolbenstange 12 ist eine Dichtung 25 angeordnet, die den Eintritt von Schmutz in die Bohrung 24 und damit in den Bereich des Ventils 22 verhindert und die gleichzeitig als eine Art Reibungsbremse dient, mittels derer ein unbeabsichtigtes Herausfallen des Auslösestiftes 23 aus der Bohrung 24 verhindert wird. An diesem äußeren Ende ist die Kolbenstange 12 weiterhin mit einem Außengewinde 26 versehen, an dem eine nicht dargestellte Befestigungseinrichtung angebracht werden kann.

Der Kolben 21 ist auf seiner Außenseite mit einer Nut 27 versehen, in der eine O-ringförmige Dichtung 28 angeordnet ist, die dichtend gegen die Innenwand 7 des Gehäuses 1 anliegt. Sie teilt den Flüssigkeitsraum 19 in zwei Teil-Flüssigkeitsräume 19a und 19b, von denen der Teil-Flüssigkeitsraum 19a sich zwischen der Dichtung 28 und dem Trennkolben 16 und der Teil-Flüssigkeitsraum 19b sich zwischen der Dichtung 28 und der Dichtung 13 erstreckt.

Der Kolben 21 ist hülsenförmig ausgebildet. Er weist eine zur Achse 2 zylindrische Aufnahme 29 für die Kolbenstange 12 auf. In dieser Aufnahme 29 ist die Kolbenstange 12 radial spielfrei gehalten. Die Aufnahme 29 weist eine kanalartige Öffnung 3o auf, die in den Teil-Flüssigkeitsraum 19a mündet und als zur Achse 2 konzentrische Bohrung ausgebildet ist. Zwischen der Aufnahme 29 und der Öffnung 3o ist ein Ringboden 31 der Aufnahme 29 ausgebildet.

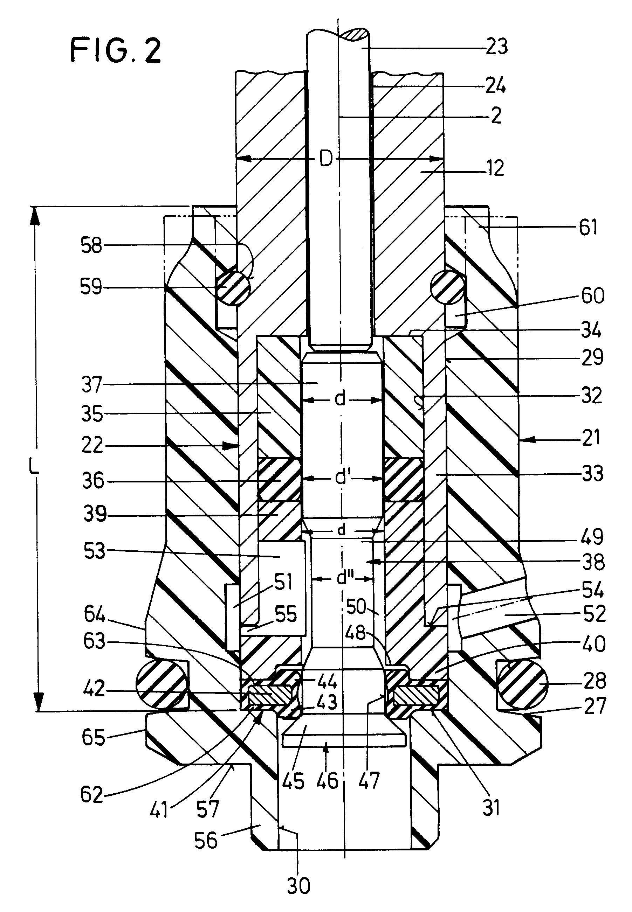

Die Kolbenstange 12 ist an ihrem im Kolben 21 befindlichen Ende mit einer zur Achse 2 koaxialen zylindrischen Bohrung 32 versehen; die in diesem Bereich verbliebene Wand bildet ein Ventilgehäuse 33 mit einem radial zur Achse 2 verlaufenden ringförmigen Boden 34. In dieses Ventilgehäuse 33 ist eine ringzylindrische Führungsbüchse 35 eingesetzt, die gegen den Boden 34 anliegt. Auf der dem Boden 34 abgewandten Seite liegt gegen die Führungsbüchse 35 eine O-ringförmige Dichtung 36 an, die einerseits gegen das Ventilgehäuse 33 und andererseits gegen einen zylindrischen Führungsabschnitt 37 eines Ventilkörpers 38 dichtend anliegt. Gegen die Dichtung 36 liegt wiederum eine Halte- und Führungsbüchse 39 an, die mit einem nach außen vorstehenden Ringbund 4o das Ventilgehäuse 33 übergreift, also axial gegen die Kolbenstange 12 festgelegt ist. Der Innendurchmesser d der Führungsbüchse 35 und der Halte- und Führungsbüchse 39 ist identisch und nur um das notwendige Führungsspiel größer als der Außendurchmesser d' des zylindrischen Führungsabschnitts 37 des Ventilkörpers 38, der in der Führungsbüchse 35 und der Halte- und Führungsbüchse 39 geführt ist, wie Fig. 2 erkennen läßt.

Zwischen dem Ringbund 4o und dem Ringboden 31 ist eine Dichtung 41 angeordnet. Diese weist einen inneren zur Stabilisierung dienenden Ring 42 aus einem festen Werkstoff, wie einem Metall oder einem ausreichend harten Kunststoff auf. Die Dichtung 41 liegt einerseits gegen die Aufnahme 29, andererseits gegen den Ringboden 31 und gegen den diesem gegenüberliegenden Ringbund 4o dichtend an. An ihrer radial innenliegenden Seite ist die Dichtung 41 mit axial und radial vorstehenden Dichtungswulsten 43,44 versehen. Der Dichtungswulst 43 liegt gegen eine sich kegelstumpfförmig erweiternde Dichtungsfläche 45 eines in der Öffnung 3o befindlichen Ventiltellers 46 des Ventilkörpers 38 an. Außerdem liegt dieser Dichtungswulst 43 gegen einen sich an die kegelstumpfförmige Dichtungsfläche 45 anschließende zylindrische Dichtfläche 47 des Ventilkörpers 38 an. Der andere zum Inneren des Ventils 22 hin befindliche Dichtungswulst 44 liegt bei der Ausgestaltung nach Fig. 2 nur an dieser zylindrischen Dichtfläche 47 an. Der Dichtungswulst 43 steht über den Ringboden 31 radial nach innen in die kanalartige Öffnung 3o vor, während der andere Dichtungswulst 44 axial ungeführt frei in eine Hinterschneidung 48 des Ringbundes 4o hineinragt; die Dichtungswulste 43,44 sind also axial unverpreßt.

An die zylindrische Dichtfläche 47 schließt sich unmittelbar ein gegenüber dieser und gegenüber dem Führungsabschnitt verjüngter Abschnitt 49 an, dessen Außendurchmesser d'' deutlich kleiner ist als der Innendurchmesser d der Halte- und Führungsbüchse 39, so daß zwischen diesen ein Überströmraum 5o gebildet wird. Der Übergang von der Dichtfläche 47 auf den Abschnitt 49 kann abrupt sein oder über eine Kegelstumpffläche erfolgen, wie in der Zeichnung dargestellt ist.

In der Aufnahme 29 ist im Bereich des Übergangs zwischen dem Ventilgehäuse 33, also der Kolbenstange 12 und des Ringbundes 4o ein Ringkanal 51 ausgebildet, der also nach innen jeweils teilweise durch das Ventilgehäuse 33 und den Ringbund 4o abgedeckt wird. Dieser Ringkanal 51 ist durch eine Überströmöffnung 52 mit dem Teil-Flüssigkeitsraum 19b verbunden.

Radial gegenüber der Überströmöffnung 52 ist in der Halte- und Führungsbüchse 39 ein sich parallel zur Achse 2 erstreckender schlitzartiger Durchbruch 53 ausgebildet. Diesem zugeordnet ist in der Stirnseite 54 des Ventilgehäuses 33 eine Drosselöffnung 55 ausgebildet, die also zum Ringkanal 51 hin offen ist. Aus dem Teil-Flüssigkeitsraum 19b kann also Flüssigkeit durch die durch eine Bohrung gebildete kanalartige Überströmöffnung 52 in den Ringkanal 51 und dann auf der diametral gegenüberliegenden Seite durch die Drosselöffnung 55 und den Durchbruch 53 in den Überströmraum 5o fließen. Die Strömung kann naturgemäß auch in umgekehrter Richtung erfolgen.

Wenn durch Hineindrücken des Auslösestiftes 23 in die Kolbenstange 12 hinein der Ventilkörper in Richtung zum Teil-Flüssigkeitsraum 19a verschoben wird, dann kommt der verjüngte Abschnitt 49 vor die Dichtung 41, deren Dichtungswulste 43,44 aufgrund des relativ kleinen Durchmessers d″ nicht dichtend an dem verjüngten Abschnitt 49 anliegen. In diesem Fall kann dann die Flüssigkeit aus dem Überströmraum 5o innen an der Dichtung 41 vorbei in die Öffnung 3o und von dort in den Teil-Flüssigkeitsraum 19a bzw. in umgekehrter Richtung fließen.

Der Ventilteller 46 bleibt bei diesen Verstellbewegungen in der kanalartigen Öffnung 3o, die wie ein Schutzrohr 56 über die Stirnseite 57 des Kolbens 21 vorsteht. Wenn in einem Grenzfall, bei völlig eingeschobener Kolbenstange 12, der Kolben 21 an den Trennkolben 16 stößt, dann kommen die Abstandshalter 2o zur Anlage an die Stirnseite 57, so daß auch dann Flüssigkeit ungehindert in die Öffnung 3o bzw. aus der Öffnung 3o strömen kann. Durch die diametrale Anordnung von Überströmöffnung 52 und Drosselöffnung 55 wird eine gute Schalldämmung erreicht. Die Ausbildung der Drosselöffnung 55 in der Stirnseite 54 des aus der Kolbenstange 12 herausgearbeiteten Ventilgehäuses 33 läßt in sehr einfacher Weise eine exakte Dimensionierung des Querschnitts der Drosselöffnung 55 zu, der auf jeden Fall erheblich kleiner ist als die Querschnitte des Durchbruchs 53, der Überströmöffnung 52 und des Ringkanals 51, so daß die Drosselung so gut wie ausschließlich nur in dieser Drosselöffnung 55 stattfindet.

Der Kolben 21 ist an seinem seiner Stirnseite 57 abgewandten Ende auf der Kolbenstange in dem Bereich hinter dem Ventilgehäuse 33 festgelegt. Hier weist die Kolbenstange 12 eine Ringnut 58 mit Teilkreisquerschnitt auf, in die ein Sicherungsring 59 mit Kreisquerschnitt eingelegt ist. Der Kolben 21 ist auf seiner dem Ringboden 31 entgegengesetzten offenen Seite in unverformtem Zustand mit einer koaxial zur Achse 2 verlaufenden Bohrung 6o versehen. Die Form des Kolbens 21 in diesem Bereich in unverformtem Zustand ist in Fig. 2 mit einer Strich-Doppelpunkt-Linie angedeutet. Nach dem Zusammenfügen des Ventils und des Kolbens in der oben geschilderten Weise wird der Kolben im Be reich dieser Bohrung 6o zur Kolbenstange 12 hin verformt. Er liegt dann axial gegen den Sicherungsring 59 und auch in seinem äußeren Endbereich mit einem verjüngten Abschnitt 61 gegen die Kolbenstange an. Bei dieser Verformung wird der Kolben 21 axial gegen das Ventil 22 verspannt, wobei die Dichtung 41 axial zwischen dem Ringboden 31 und dem Ringbund 4o zusammengedrückt wird. Da der Ring 42 der Dichtung 41 in sich starr ist, können hierbei nur die relativ dünnen Dichtungsflächen 62,63, die gegen den Ringboden 31 bzw. den Ringbund 4o anliegen, komprimiert werden. In unverpreßtem Zustand sind diese Dichtungsflächen 62,63 einige zehntel Millimeter, beispielsweise also o,3 bis o,6 mm dick. Um die Verformung zu ermöglichen besteht der Kolben 21 aus einer geeigneten Leichtmetallegierung oder einem geeigneten thermisch verformbaren Kunststoff.

Wie aus Fig. 2 erkennbar ist, ist die Gesamtlänge L der Aufnahme 29 im Vergleich zum Außendurchmesser D der Kolbenstange 12 groß. Sie ist etwa zwei- bis viermal und insbesondere etwa dreimal so groß. Dadurch tritt keine Verkantung der Kolbenstange 12 relativ zur Dichtung 28 ein, so daß eine einwandfreie Führung des Kolbens 21 mit seinen beiderseits der Dichtung 28 befindlichen Führungsflächen 64,65 an der Innenwand 7 des Gehäuses 1 gewährleistet ist. Außerdem ist auch kein Verkanten gegenüber der Dichtung 41 möglich, so daß trotz der sehr dünnen Ausbildung der Dichtungsflächen 62,63 eine einwandfreie Abdichtung gewährleistet ist.

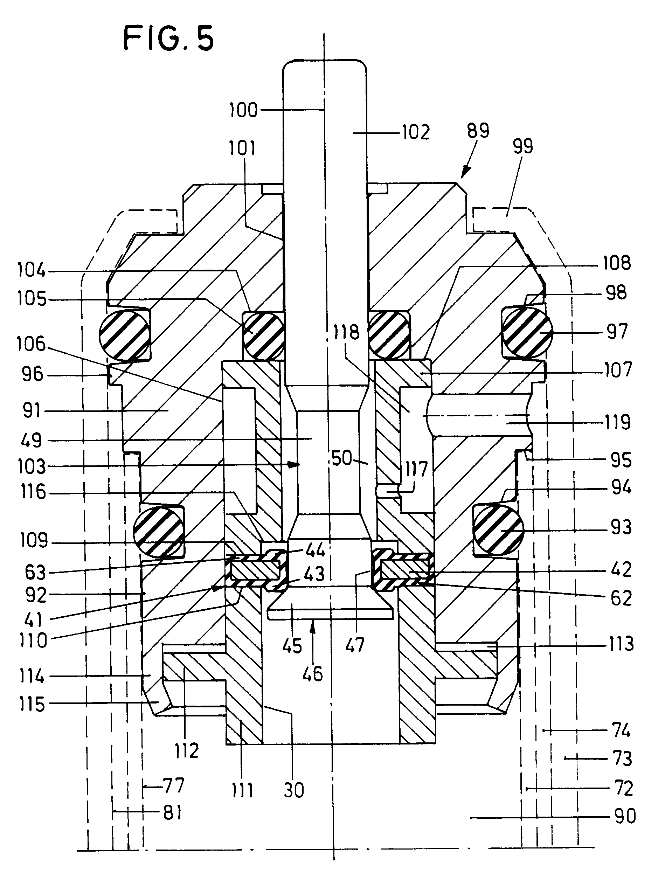

In Fig. 3 ist ein Teilausschnitt aus dem Kolben 21 mit Ventil 22 dargestellt, das sich von der Auführungsform nach Fig. 2 nur dadurch unterscheidet, daß sich der verjüngte Abschnitt 49′ des Ventilkörpers 38′ bis zur kegelstumpfförmigen Dichtfläche 45′ des Ventiltellers 46′ erstreckt. In diesem Fall liegt die Dichtung 41 nur mit ihrem einen der Öffnung 3o zugewandten Dichtungswulst 43 an der Dichtfläche 45′ an. Der andere Dichtungswulst 44 ist gegenüber dem Ventilkörper 38′ funktionslos. Bei dieser Ausführungsform ist das Ventil 21 bereits geöffnet, wenn der Auslösestift 23 und damit der Ventilkörper 38′ nur geringfügig in Richtung der Achse 2 verschoben werden, beispielsweise um weniger als einen Millimeter, da zum Öffnen des Ventils bereits das Abheben der Dichtfläche 45′ von dem Dichtungswulst 43 ausreicht. Dagegen muß bei der Ausführungsform nach Fig. 2 zum Öffnen des Ventils der Ventilkörper 38 so weit in Richtung der Achse 2 verschoben werden, bis die zylindrische Dichtfläche 47 außer Eingriff mit beiden Dichtungswulsten 43,44 kommt. Der Öffnungshub beträgt also einige Millimeter.

Da der Flüssigkeitsraum 19 mit Flüssigkeit gefüllt ist, wird die Verstelleinrichtung bei geschlossenem Ventil 22 vollständig blockiert.

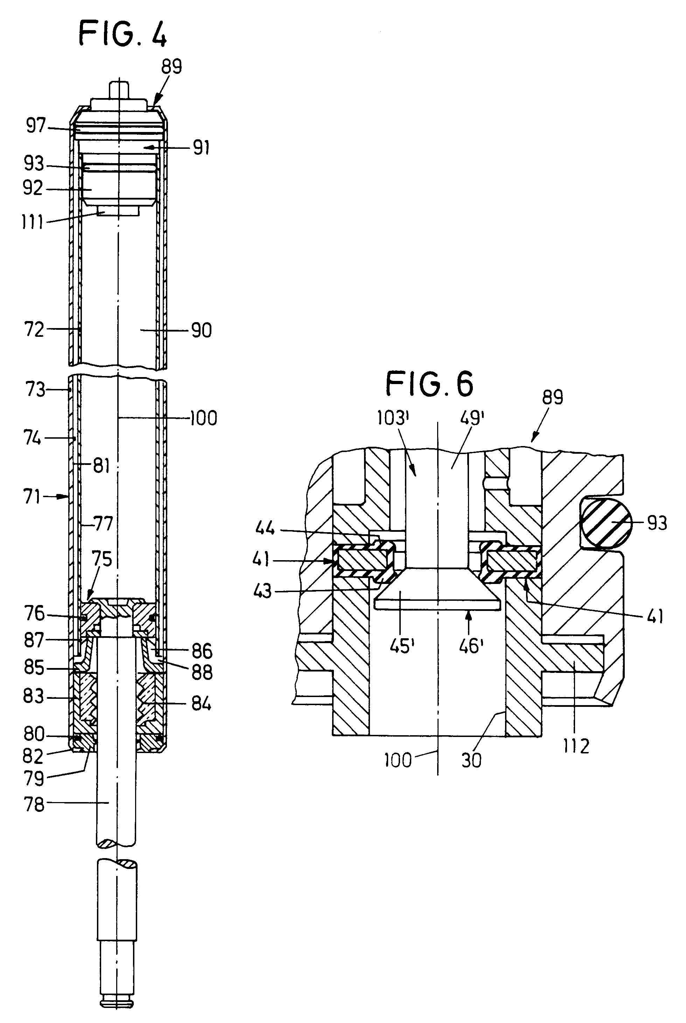

Die in Fig. 4 dargestellte längeneinstellbare Gasfeder weist ein Gehäuse 71 auf, das im wesentlichen aus zwei konzentrisch ineinander gelagerten Rohren mit unterschiedlichem Durchmesser, nämlich einem Innenzylinder 72 und einem Außenzylinder 73 besteht. Zwischen dem Außenzylinder 73 und dem Innenzylinder 72 ist aufgrund des unterschiedlichen Durchmessers von Innenzylinder 72 und Außenzylinder 73 ein Ringraum 74 gebildet.

In dem Innenzylinder 72 ist ein etwa ringförmiger Kolben 75 axial verschiebbar angeordnet, der über einen Dichtungsring 76 gasdicht mit seinem Außenumfang gegenüber der Innenwand 77 des Innenzylinders 72 abgedichtet ist. Der Kolben 75 ist an einem Ende einer koaxial zum Gehäuse 71 geführten Kolbenstange 78 befestigt. Diese Kolbenstange 78 ist aus einem Ende des Gehäuses 71 herausgeführt. An diesem Ende ist das Gehäuse 71 durch eine Abschlußscheibe 79 verschlossen, die an ihrem Außenumfang mittels einer Ringdichtung 8o gegenüber der Innenwand 81 des Außenzylinders gasdicht abgedichtet ist. Die Abschlußscheibe 79 ist durch eine Umbördelung 82 des Außenzylinders 73 axial nach außen gehalten. Auf der Innenseite liegt gegen die Abschlußscheibe 79 eine topfförmige Hülse 83 an, die eine Mehrfach-Lippen-Dichtung 84 aufnimmt, die mit ihren Lippen dichtend gegen die Kolbenstange 78 anliegt. Dadurch wird ein Gasaustritt entlang der Oberfläche der Kolbenstange 78 nach außen unterbunden.

Gegen die Hülse 83 stützt sich vom Innenraum des Gehäuses 71 her ein an der Innenwand 81 des Außenzylinders 73 anliegendes Zentrierstück 85 ab, das mit Rippen 86 versehen ist, auf denen der Innenzylinder 72 mit seiner Innenwand 77 radial abgestützt, also zentriert ist. Auf diesen Rippen 86 ist der Innenzylinder 72 auch axial fest abgestützt, also axial einseitig festgelegt. Dadurch daß nur Rippen 86 zur Zentrierung und axialen Abstützung des Innenzylinders 72 vorgesehen sind, ist in diesem Bereich der Ringraum 74 mit dem Gehäuseraum 87 im Innenzylinder 72 verbunden, der zwischen dem Kolben 75, dem kolbenstangenaustrittsseitigen Ende des Gehäuses 71 und der Innenwand 77 des Innenzylinders 72 begrenzt wird. Zwischen den Rippen 86 sind also Überströmkanäle 88 zwischen dem Gehäuseraum 87 und dem Ringraum 74 gebildet.

An dem dem Kolbenstangenaustritt entgegengesetzten Ende des Gehäuses 71 ist ein Ventil 89 angeordnet, mittels dessen der im Innenzylinder 72 zwischen dem Kolben 75 und dem Ventil 89 befindliche Gehäuseraum 9o mit dem Ringraum 74 und damit dem anderen Gehäuseraum 87 verbunden bzw. von diesem getrennt werden kann.

Das Ventil 89 weist ein Ventilgehäuse 91 auf, das aus mehreren zylindrischen Abschnitten besteht. Es weist einen zylindrischen Abschnitt 92 auf, dessen Außendurchmesser dem Innendurchmesser des Innenzylinders 72 entspricht und in diesem radial fest angeordnet ist. Eine gasdichte Abdichtung zwischen dem zylindrischen Abschnitt 92 und der Innenwand 77 des Innenzylinders 72 erfolgt über eine O-Ring-Dichtung 93, die in einer Ringnut 94 des zylindrischen Abschnitts 92 angeordnet ist. Das Ventilgehäuse 91 ist gegenüber dem Innenzylinder 72 durch einen Ringbund 95 axial festgelegt. Das Ventilgehäuse weist einen weiteren zylindrischen Abschnitt 96 auf, dessen Außendurchmesser dem Innendurchmesser des Außenzylinders 73 entspricht und der radial spielfrei gegen die Innenwand 81 des Außenzylinders 73 anliegt, wobei hier eine gasdichte Abdichtung mittels einer O-Ring-Dichtung 97 erfolgt, die in einer Ringnut 98 dieses zylindrischen Abschnitts 96 angeordnet ist. Der Außenzylinder 73 ist um das Ventilgehäuse 91 umgebördelt. Durch diese Umbördelung 99 sind der Innenzylinder 72 und der Außenzylinder 73, das Ventilgehäuse 91 und die im Bereich des Kolbenstangenaustritts gelegenen Teile axial zusammengespannt. Die gesamte als Gasfeder ausgebildete Verstelleinrichtung ist drehsymmetrisch zu einer Mittel-Längs-Achse 1oo ausgebildet.

Koaxial zur Achse 1oo ist eine Führungsbohrung 1o1 ausgebildet, in der ein als Auslösestift 1o2 dienender Führungsabschnitt eines Ventilkörpers 1o3 in Richtung der Achse 1oo verschiebbar angeordnet ist, der aus der Führungsbohrung 1o1 des Ventilgehäuses 91 nach außen herausragt. Im Bereich des inneren Endes der Führungsbohrung 1o1 ist eine Ringnut 1o4 ausgebildet, in der eine O-Ring-Dichtung 1o5 angeordnet ist, die zwischen der Führungsbohrung 1o1 des Ventilgehäuses 91 und dem Auslösestift 1o2 gasdicht abdichtet.

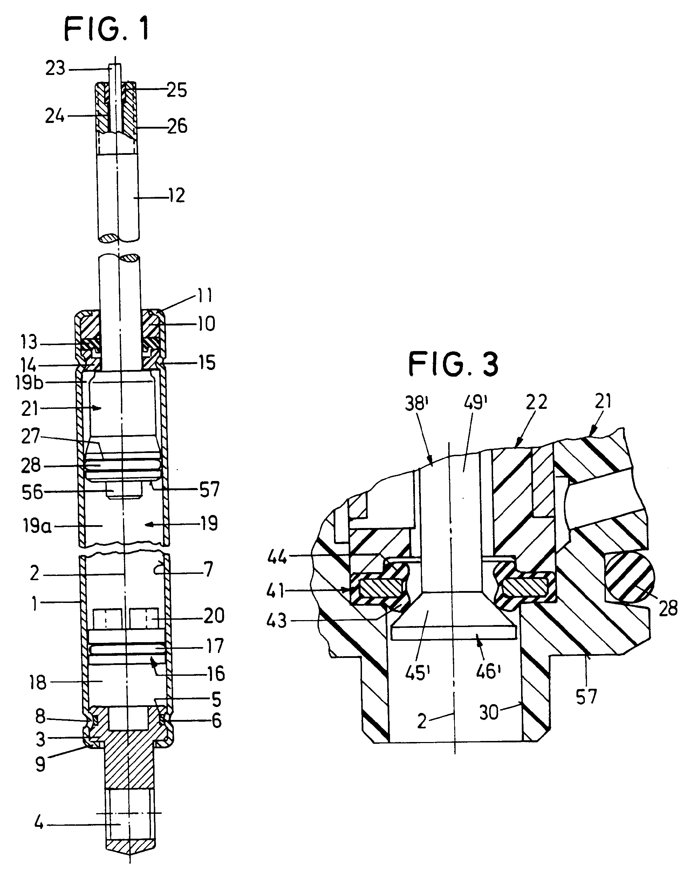

An die Führungsbohrung 1o1 mit der Ringnut 1o4 schließt sich zum Gehäuseraum 9o eine zylindrische Bohrung 1o6 an, in der sich eine Haltebüchse 1o7 befindet, die gegen den Boden 1o8 der sacklochartigen Bohrung 1o6 anliegt und hierbei gleichzeitig die Dichtung 1o5 in der Ringnut 1o4 hält. Gegen den einen dem Boden 1o8 entgegengesetzten Ringbund 1o9 der Haltebüchse 1o7 liegt eine Dichtung 41 an, die identisch zu der Dichtung 41 der Ausführungsbeispiele nach den Fig. 1 bis 3 ausgebildet ist und deshalb nicht neu beschrieben zu werden braucht. Es wird auf die obige Beschreibung verwiesen. Diese Dichtung 41 liegt gegen eine Stirnseite 11o einer Befestigungshülse 111 an, die von der dem Gehäuseraum 9o zugewandten Seite in die zylindrische Bohrung 1o6 eingeführt ist. Diese Befestigungshülse 111 weist einen radial vorstehenden Befestigungsflansch 112 auf, der in eine der Bohrung 1o6 zum Gehäuseraum 9o hin vorgeordnete Ausnehmung 113 hineinragt, die seitlich durch einen Ringsteg 114 begrenzt wird. Durch Erzeugen einer den Befestigungsflansch 112 radial nach innen übergreifenden Umbördelung 115 wird der Befestigungflansch 112 und damit die Befestigungshülse 111 in Richtung zum Boden 1o8 der Bohrung 1o6 gedrückt. Dadurch wird die Dichtung 41 zwischen dem Ringbund 1o9 der Haltebüchse 1o7 und der Stirnseite 11o der Befestigungshülse 111 eingespannt. Außerdem werden die Haltebüchse 1o7 und die Befestigungshülse 111 axial festgelegt. Hierbei kommt die Dichtungsfläche 62 der Dichtung 41 zur Anlage an der Stirnseite 11o und die Dichtungsfläche 63 zur Anlage am Ringbund 1o9. Der Dichtungswulst 44 ragt in eine Hinterschneidung 116 am Ringbund 1o9 der Haltebüchse 1o7.

Der Ventilkörper 1o3 ist unterhalb des Auslösestiftes 1o2 identisch zum Ventilkörper 38 des Ausführungsbeispiels nach Fig. 2 ausgebildet, so daß dieselben Bezugsziffern für die verschiedenen Teile verwendet werden. Auch das Zusammenwirken zwischen der Dichtung 41 und dem Ventilkörper 1o3 ist identisch zum Ausführungsbeispiel nach Fig. 2, so daß auf die obigen Erläuterungen verwiesen werden darf. Der Überströmraum 5o zwischen dem verjüngten Abschnitt 49 des Ventil körpers 1o3 und der Haltebüchse 1o7 ist mittels eines Durchbruchs 117, der beispielsweise durch eine Bohrung gebildet ist, mit einem Ringkanal 118 verbunden, der zwischen der Haltebüchse 1o7 und der Bohrung 1o6 ausgebildet ist. Dieser Ringkanal 118 wiederum ist mittels einer Überströmöffnung 119 mit dem Ringraum 74 verbunden.

In Fig. 6 ist ein Teilausschnitt aus dem Ventil 89 dargestellt, das sich von der Ausführungsform nach Fig. 5 nur dadurch unterscheidet, daß sich der verjüngte Abschnitt 49' des Ventilkörpers 1o3' - gleichermaßen wie bei der Ausführungsform nach Fig. 3 - bis zur kegelstumpfförmigen Dichtfläche 45' des Ventiltellers 46' erstreckt. In diesem Fall liegt die Dichtung 41 nur mit ihrem einen der Öffnung 3o zugewandten Dichtungswulst 43 an der Dichtfläche 45' an. Der andere Dichtungswulst 44 ist gegenüber dem Ventilkörper 1o3' funktionslos. Die Funktion ist die gleiche wie bei der Ausführungsform nach Fig. 3.

Bei dieser Ausführungsform nach den Fig. 4 und 5 bzw. 6 strömt das in den Gehäuseräumen 87,9o befindliche Fluid bei geöffnetem Ventil 89 in grundsätzlich bekannter Weise - wie oben geschildert - durch das Ventil 89 und den Ringraum 74, den Überströmkanal 88 bzw. umgekehrt.

## Patentansprüche

1. Längeneinstellbare Verstelleinrichtung, mit einem an einem Ende verschlossenen, mit einem Druckmedium gefüllten zylindrischen Gehäuse (1,71), mit einer abgedichtet aus dem anderen Ende des Gehäuses (1) herausgeführten, in letzterem verschiebbaren Kolbenstange (12,78), mit einem im Gehäuse (1,71) angeordneten, gegenüber dessen Innenwand (7,77) abgedichtet geführten, fest mit der Kolbenstange (12,78) verbundenen, mit dieser verschiebbaren und den Innenraum des Gehäuses (1,71) in zwei Teil-Räume (19a,19b,87,9o) aufteilenden Kolben (21,75)und mit einem Ventil (22,89) zum Verbinden oder Trennen der beiden TeilRäume (19a, 19b,87,9o), das einen mittels eines verschiebbar geführten Auslösestiftes (23,1o2) betätigbaren Ventilkörper (38,38',1o3,1o3') aufweist, der mit einer Dichtfläche (45,47,45') gegen eine Dichtung (41) anliegt und der durch Verschieben in eine die Dichtung (41) mittels eines verjüngten Abschnitts (49,49') überbrückende Stellung bringbar ist, dadurch gekennzeichnet, daß die Dichtung (41) zwei radial nach innen und axial frei vorstehende Dichtungswulste (43,44) aufweist, von denen ein Dichtungswulst (43) gegen eine kegelstumpfförmige Dichtfläche (45,45') des Ventilkörpers (38,38',1o3,1o3') anliegt und von denen der andere Dichtungswulst (44) gegebenenfalls gegen eine sich an die kegelstumpfförmige Dichtungsfläche (45,45') anschließende zylindrische Dichtungsfläche (47) des Ventilkörpers (38,1o3) anliegt.

2. Verstelleinrichtung nach Anspruch 1, dadurch gekennzeichnet, daß der verjüngte Abschnitt (49) sich an die zylindrische Dichtfläche (47) anschließt.

3. Verstelleinrichtung nach Anspruch 1, dadurch gekennzeichnet, daß der verjüngte Abschnitt (49') sich unmittelbar an die kegelstumpfförmige Dichtfläche (45') anschließt

4. Verstelleinrichtung nach Anspruch 1, dadurch gekennzeichnet, daß die Dichtung (41) einen inneren Stütz-Ring (42) aufweist.

## Claims

1. A positioning device adjustable in length, with a cylindrical housing (1, 71) closed at one end and filled with a pressure medium, with a piston rod (12, 78) sealingly extending from the other end of the housing (1) and displaceable therein, with a piston (21, 75) disposed in the housing (1, 71) and sealingly guided against an inner wall (7, 77) thereof, the piston (21, 75) being fixedly connected with the piston rod (12, 78) and being displaceable together with the piston rod (12, 78) and dividing the inner chamber of the housing (1, 71) into two partial chambers (19a, 19b, 87, 90), with a valve (22, 89) for connecting or separating the two partial chambers (19a, 19b, 87, 90) which valve (22, 89) has a valve body (38, 38' 103, 103') actuable by means of a displaceably guided trigger pin (23, 102), which valve body (38, 38' 103, 103') abuts against a seal (41) with a sealing surface (45, 47, 45') and which can be brought by displacement into a position bridging the seal (41) by means of a tapered section (49, 49'), characterized in that the seal (41) has two sealing beads (43, 44) projecting radially inward and axially freely, one sealing bead (43) of the two abutting on a truncated cone-like sealing surface (45, 45') of the valve body (38, 38', 103, 103') and the other sealing bead (44) of the two abutting if required, on a cylindrical sealing surface (47) of the valve body (38, 103) adjoining the truncated cone-like sealing surface (45, 45').

2. A positioning device in accordance with claim 1, characterized in that the tapered section (49) adjoins the cylindrical sealing surface (47).

3. A positioning device in accordance with claim 1, characterized in that the tapered section (49') immediately abuts on the truncated cone-like sealing surface (45').

4. A positioning device in accordance with claim 1, characterized in that the seal (41) has an interior stabilization ring (42).


## Revendications

1. Dispositif de positionnement à longueur réglable comprenant un boîtier cylindrique (1, 71) fermé à une extrémité et rempli d'un moyen de pression, comportant une tige de piston (12, 78) guidée de façon étanche, pour sortir à l'autre extrémité du boîtier (1) et pouvant être déplacée dans celui-ci, comportant un piston (21, 75) disposé dans le boîtier (1, 71) guidé de façon étanche face à la paroi intérieure (7, 77) de ce dernier et fixé sur la tige de piston (12, 78), et pouvant être déplacé avec cette dernière et divisant l'intérieur du boîtier (1, 71) en deux compartiments (19a, 19b, 87, 90), comprenant en outre une soupape (22, 89) pour relier ou séparer les deux compartiments (19a, 19b, 87, 90), et ayant un obturateur de soupape (38, 38', 103, 103') pouvant être actionné au moyen d'une cheville de déclenchement (23, 102) guidée de manière à pouvoir être déplacée et adhérant grâce à une face d'étanchéité (45, 47, 45') à une garniture d'étanchéité (41) et pouvant être placée dans une position s'écartant de la garniture d'étanchéité (41) avec une partie rétrécie (49, 49'), caractérisé en ce que la garniture d'étanchéité (41) comprend deux bourrelets d'étanchéité (43, 44) faisant saillie vers l'intérieur en laissant l'axe libre, dont un bourrelet d'étanchéité (43) adhère à une face d'étanchéité tronconique (45, 45') de l'obturateur de soupape (38, 38', 103, 103') et dont l'autre bourrelet d'étanchéité (44) adhère, le cas échéant, à une face d'étanchéité cylindrique (47) prolongeant la face d'étanchéité tronconique (45, 103) de l'obturateur de soupape (38, 103).

2. Dispositif de positionnement selon la revendication 1, caractérisé en ce que la partie rétrécie (49) prolonge la face d'étanchéité cylindrique (47).

3. Dispositif de positionnement selon la revendication 1, caractérisé en ce que la partie rétrécie (49') s'étend jusqu'à la face d'étanchéité tronconique (45').

4. Dispositif de positionnement selon la revendication 1, caractérisé en ce que la garniture d'étanchéité (41) comporte une rondelle annulaire intérieure servant d'âme (42).

# FIG. 1

# FIG. 3

# FIG. 2

# FIG. 5

## FIG. 4

## FIG. 6